# EUROPÄISCHE PATENTSCHRIFT

(11) **EP 0 545 974 B1**
(45) Veröffentlichungstag und Bekanntmachung des Hinweises auf die Patenterteilung: **26.01.1994**
(21) Anmeldenummer: 91914769.4
(22) Anmeldetag: 20.08.1991
(51) Int. Cl.: F02B 77/08

(54) **ÜBERWACHUNG DER KATALYTISCHEN AKTIVITÄT EINES KATALYSATORS IM ABGASSYSTEM EINER BRENNKRAFTMASCHINE**
MONITORING OF THE CATALYTIC ACTIVITY OF A CATALYST IN THE EXHAUST GAS SYSTEM OF AN INTERNAL COMBUSTION ENGINE
SURVEILLANCE DE L'ACTIVITE CATALYTIQUE D'UN CATALYSEUR DANS LE SYSTEME D'ECHAPPEMENT D'UN MOTEUR A COMBUSTION INTERNE

(30) Priorität: 28.08.1990 DE 4027207
(43) Veröffentlichungstag der Anmeldung: 16.06.1993
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); SWARS, Helmut, D-5060 Bergisch Gladbach 1 (DE); BRÜCK, Rolf, D-5060 Bergisch Gladbach 1 (DE)
(74) Vertreter: Kahlhöfer, Hermann, Dipl.-Phys.
(86) Internationale Anmeldenummer: EP9101582
(87) Internationale Veröffentlichungsnummer: WO9203642

(56) Entgegenhaltungen:
- EP-A- 0 236 659
- DE-A- 2 643 739
- DE-A- 3 516 981
- DE-A- 3 710 268
- PATENT ABSTRACTS OF JAPAN, vol. 4, no. 163 (P-36)(645) 13. November 1980 & JP-A-55 110 941 (SHOWA) 27. August 1980
- PATENT ABSTRACTS OF JAPAN, vol. 2, no. 124 (E-78)(7256) 18. Oktober 1978 & JP-A-53 089 482 (MITSUBISHI) 8. Juli 1978

## Beschreibung

Die Erfindung betrifft Verfahren zur Überwachung der katalytischen Aktivität eines Katalysators im Abgassystem einer Brennkraftmaschine, sowie Anordnungen mit einem Katalysator zur Verwendung im Abgassystem einer Brennkraftmaschine, die zur Überwachung mit dem erfindungsgemäßen Verfahren besonders geeignet sind.

Entsprechend den in vielen Ländern immer strenger werdenden Umweltschutzvorschriften werden in zunehmendem Maße Brennkraftmaschinen, insbesondere Motore von Kraftfahrzeugen, mit Abgassystemen ausgestattet, die mit Katalysatoren zur Umsetzung von Schadstoffen in den Abgasen der Brennkraftmaschinen in unschädliche Stoffe versehen sind. Als "Katalysator" wird üblicherweise ein wabenähnlicher Körper aus Metall oder Keramik verstanden, der eine Vielzahl von Kanälen aufweist, die von Abgasen durchströmbar sind. Jeder Kanal weist dabei eine Wand auf, die mit einer Beschichtung aus katalytisch aktivem Material, dem Katalysator im eigentlichen Sinne, bedeckt ist. Metallische Katalysatoren werden im allgemeinen aus strukturierten Blechen geschichtet, spiralig aufgewickelt oder anderweitig verschlungen. Solche Formen sind beispielsweise in der EP 0 223 058 B2, der EP 0 245 737 B2 oder der EP 0 245 738 B2 beschrieben.

Zur Sicherstellung der Funktion eines Katalysators im Abgassystem einer Brennkraftmaschine ist es bekannt, den Katalysator mit Meßfühlern zur Temperat überwachung oder dergleichen zu versehen, um aus den erhaltenen Meßwerten Rückschlüsse auf seine Funktion beim Betrieb der Brennkraftmaschine ziehen zu können. Entsprechende Vorschläge sind der DE 26 43 739 A1, der DE 37 10 268 A1 und der EP 0 236 659 A1 zu entnehmen. In den beiden erstgenannten Schriften wird vorgeschlagen, einen Katalysator mit zumindest zwei Temperaturfühlern auszustatten, die an verschiedenen Orten des Katalysators, in Richtung des strömenden Abgases gesehen hintereinander, angeordnet sind. Die Meßfühler können dabei beide außerhalb des Katalysators, ein erster Fühler vor der Anströmseite des Katalysators und ein zweiter Fühler hinter der Abströmseite des Katalysators, angeordnet sein; auch führt die DE 26 43 739 A1 aus, zumindest einen Meßfühler im Inneren des Katalysators vorzusehen. Beide Schriften schlagen weiterhin vor, aus den Meßsignalen der Fühler ein Signal zu bilden, das der Differenz der von den Meßfühlern ermittelten Temperaturen entspricht, und dieses Signal heranzuziehen zur Bewertung der Funktion des Katalysators. In der EP 0 236 659 A1 wird ein Auswertesystem für die Signale der Meßfühler vorgestellt. Das Auswertesystem veranlaßt ein Warnsignal, falls die Temperaturdifferenz einen gewissen ersten Grenzwert überschreitet, und ein einen dauerhaften Schaden vorgebendes Signal, falls die Temperaturdifferenz einen deutlich über dem ersten Grenzwert liegenden zweiten Grenzwert übertrifft.

In der DE-26 43 739 A1 wird weiterhin vorgeschlagen, zwei Temperaturmeßfühler im Bereich der Abströmseite des Katalysators dicht nebeneinander anzuordnen, wobei ein erster Fühler eine katalytisch aktive Oberfläche, ein zweiter Fühler jedoch eine katalytisch inaktive Oberfläche aufweist. Mit einer derartigen Meßanordnung läßt sich feststellen, ob das an den Meßfühlern vorbeiströmende Abgas noch umsetzbare Schadstoffe enthält; dies würde dazu führen, daß beide Meßfühler unterschiedliche Temperaturen signalisieren.

Zur Realisierung einer langfristigen und zuverlässigen Uberwachung eines Katalysators in einem Abgassystem gibt der Stand der Technik keinerlei Hinweise. Im langfristigen Mittel, im Falle der Brennkraftmaschine eines Kraftfahrzeuges über eine Laufleistung in der Größenordnung von 100.000 km, bzw. über eine Betriebszeit in der Größenordnung von 1.000 Std., nimmt die Fähigkeit eines Katalysators zur Umsetzung der ihm zugeführten Schadstoffe stetig ab. Dieser Prozeß wird als "Alterung" bezeichnet; er wird verursacht durch vielfältige physikalische und chemische Umwelteinflüsse, die auch bei sorgsamster Behandlung des Katalysators nicht vermieden werden können. Neben der Alterung eines Katalysators ist bekanntermaßen auch eine "Vergiftung" möglich (z. B. durch Verwendung bleihaltigen Benzins in einem mit Katalysator versehenen Ottomotor), die in kurzer Zeit zum teilweisen oder völligen Verlust der katalytischen Aktivität führen kann. Der Prozeß der Alterung hängt in hohem Maße von der Beanspruchung ab, der der Katalysator im jeweils üblichen Betrieb ausgesetzt ist. Dies bedeutet, daß praktisch in jedem Kraftfahrzeug eine benutzungsspezifische Alterung des Katalysators erfolgt; allgemeingültige Voraussagen über die Haltbarkeit eines Katalysators, selbst wenn nach Autotypen differenziert wird, sind kaum möglich. Allgemeine Vorgaben, nach welcher Benutzungsdauer oder nach welcher Fahrstrecke ein Katalysator ausgewechselt werden muß, müßten zur Vermeidung der weiteren Benutzung inaktiver Katalysatoren besonders streng sein; der Austausch noch verwendbarer Katalysatoren in nennenswertem Umfang könnte nicht vermieden werden, und außerdem gäbe es keine Erkennung vergifteter Katalysatoren. Abhilfe kann hier nur dadurch geschaffen werden, daß die Funktionsfähigkeit jedes Katalysators langfristig und zuverlässig überwacht wird; die Uberwachung muß dabei nach Kriterien erfolgen, die weitestgehend unabhängig von der jeweiligen Beanspruchung des Katalysators sind. Wie auch aus den zitierten Schriften hervorgeht, ist die Variabilität der erwähnten Temperaturmeßgrößen im Abgassystem eines Kraftfahrzeugs beim regulären Betrieb des Katalysators sehr hoch; der höchste auftretende Wert ist unter Umständen mehr als doppelt so groß als der kleinste auftretende Wert. Dementsprechend kann es nicht ausreichen, zur Beurteilung der Aktivität eines Katalysators lediglich jeweils einen einzigen, belastungsunabhängigen unteren Grenzwert für die signifikante Temperaturmeßgröße anzugeben, wobei der Katalysator als defekt gelten soll, wenn die Temperaturmeßgröße nicht oberhalb dieses Wertes liegt.

Demgegenüber sollen mit der vorliegenden Erfindung Verfahren zur überwachung eines Katalysators im Abgassystem einer Brennkraftmaschine angegeben werden, die sichere Auswertungen der Signale von dem Katalysator zugeordneten Temperaturfühlern dahingehend erlauben, daß verläßliche Aussagen über die katalytische Aktivität des Katalysators erhalten werden.

Eine erste Lösung dieser Aufgabe stellt ein Verfahren zur Überwachung der katalytischen Aktivität eines von Abgas durchströmbaren Katalysators im Abgassystem einer Brennkraftmaschine dar, wobei beim Betrieb der Brennkraftmaschine von einem Maschinenüberwachungssystem periodisch eine Messung unter Einbeziehung folgender Maßnahmen vorgenommen wird:
a) Bestimmung einer Temperaturmeßgröße aus Signalen zumindest zweier Temperaturmeßfühler, die dem Katalysator zugeordnet sind;
b) Beobachtung der Temperaturmeßgröße über einen langen Zeitraum, unter Bildung eines Temperaturmittelwertes;
c) Ermittlung der katalytischen Aktivität durch Vergleich des Temperaturmittelwertes mit einem vorgegebenen Grenzwert, und Abgabe einer Meldung, falls der Temperaturmittelwert kleiner als der Grenzwert ist.

Gemäß einer ersten Variante der Erfindung wird aus den Signalen der dem Katalysator zugeordneten Temperaturfühler eine Temperaturmeßgröße gebildet, die über einen langen Zeitraum hinweg unter Bildung eines Temperaturmittelwertes beobachtet wird; damit werden folgende Vorteile realisiert:
a) Transiente Betriebszustände, üblicherweise als "Lastwechsel" bezeichnet, wirken sich auf das Meßresultat praktisch nicht mehr aus, da ihre Dauer im Vergleich zur Meßdauer sehr klein ist; die Interpretation der Meßergebnisse wird wesentlich vereinfacht. Die Vorgänge in einem Katalysator während eines Lastwechsels sind sehr komplex und begleitet von Meßresultaten, die unter Umständen stark von Meßresultaten bei stationärem Betrieb abweichen. Dies ist vor allem darauf zurückzuführen, daß bei einem Lastwechsel zwar die Geschwindigkeit des durch den Katalysator strömenden Abgases in Sekundenbruchteilen verändert wird, die Temperaturverteilung innerhalb des Katalysators jedoch erst in einem Zeitrahmen von mehreren Sekunden nachfolgt. Durch eine über einen langen Zeitraum erstreckte Messung kann der Einfluß der Transienten wesentlich unterdrückt werden.
b) Der Temperaturmittelwert umfaßt eine Vielzahl verschiedener Betriebszustände der Brennkraftmaschine; er erlaubt daher eine Aussage, die weitgehend unabhängig von der jeweiligen Verwendung der Brennkraftmaschine ist.

Günstigerweise wird der langfristige Zeitraum, dessen Ablauf durch vorübergehendes Stillsetzen der Brennkraftmaschine selbstverständlich gehemmt werden muß, auf zumindest etwa 10 Std. bemessen, vorzugsweise auf eine Dauer zwischen etwa 100 Std. und etwa 1.000 Std. Es muß ein Kompromiß gefunden werden zwischen dem Wunsch nach Erzielung einer möglichst von spezieller Beanspruchung der Brennkraftmaschine unabhängigen Aussage und der Möglichkeit der alsbaldigen Erkennung eines eventuell aufgetretenen Schadens. Im Hinblick auf die Anwendung der Erfindung in einem Kraftfahrzeug entspricht die erwähnte Bemessung des Zeitraums einer Fahrleistung von etwa 1.000 km; sie ist nach oben begrenzt durch die bisherigen Erfahrungswerte zur Haltbarkeit eines Katalysators, die sich derzeit auf eine Fahrleistung um 100.000 km belaufen.

Eine besonders vorteilhafte Ausbildung des Verfahrens ist dadurch ausgezeichnet, daß die Temperaturmeßgröße periodisch bestimmt und in einem Vielkanal-Analysator registriert wird. In einem Vielkanal-Analysator wird die eingegebene Meßgröße zunächst mittels eines Digital-Analog-Konverters in digitale Form gebracht (sofern dies nicht schon vorher getan wurde), und anschließend als Adresse zur Bezeichnung einer Speicherstelle in einem Speicher des Vielkanal-Analysators verwendet. Eine an der so adressierten Speicherstelle stehende Zahl wird um Eins inkrementiert. Der Vielkanal-Analysator gestattet eine statistische Aussage darüber, wie häufig eine Temperaturmeßgröße einer bestimmten Hohe während des Meßzeitraums gemessen wurde. Entsprechend ist auch eine Aussage über die Art der Benutzung der Brennkraftmaschine möglich, womit eine weitere Verbesserung der Überwachung des Katalysators erzielbar ist. Besonders vorteilhaft ist es hierzu, die Vorgabe des Grenzwertes zur Beurteilung, ob die katalytische Aktivität des Katalysators noch ausreicht, der mit dem Vielkanal-Analysator ermittelten Art der Benutzung anzupassen. Neben dem aus der Verteilung ermittelbaren Temperaturmittelwert kann zusätzlich die Form der Verteilung zur Beurteilung der katalytischen Aktivität herangezogen werden.

Besonders einfach realisierbar ist das erfindungsgemäße Verfahren dann, wenn die Temperaturmeßgröße über den langen Zeitraum hinweg zur Bildung des Temperaturmittelwertes integriert wird. Dies kann beispielsweise mit einem einfachen analogen Integrator (einem Tiefpaß) erfolgen; die Anlage zur Realisierung des Verfahren wird besonders einfach.

Das Verfahren kann weiter verbessert werden, indem während der Durchführung der Messung neben der Temperaturmeßgröße weitere Meßgrößen beobachtet werden, die den Betriebszustand der Brennkraftmaschine selbst charakterisieren - womit natürlich auch eine Aussage über die jeweilige Beanspruchung des Katalysators verbunden ist. Derartige weitere Meßgrößen sind beispielsweise die Drehzahl der Brennkraftmaschine, die Temperatur des Abgases, der Abgasdruck, der Massendurchsatz im Abgassystem oder der Massendurchsatz des Systems zur Zuführung von Luft zur Brennkraftmaschine. Solche Meßgrößen werden von den inzwischen weitverbreiteten elektronischen Motorsteuereinrichtungen zu Zwecken der Kraftstoffzumessung beim Betrieb der Brennkraftmaschine usw. ohnehin bestimmt; es bietet sich an, sie heranzuziehen zur Beurteilung der Meßwerte, die am Katalysator bestimmt werden. Da die am Katalysator bestimmten Meßwerte stark vom jeweiligen Betriebszustand abhängig sind, kann durch Anpassung des Grenzwertes an die weiteren Meßgrößen, namentlich an deren Mittelwerte, die Bestimmung der Aktivität von der Art der Beanspruchung der Brennkraftmaschine weitgehend unabhängig gemacht werden.

Die Registrierung der weiteren Meßgrößen erfolgt, wie bereits für die Temperaturmeßgröße ausgeführt, günstigerweise mittels eines, gegebenenfalls mehrdimensionalen, Vielkanal-Analysators. Auf diese Weise kann der Betriebszustand der Brennkraftmaschine, namentlich ein "Mittelwert" für den Betriebszustand, unter Berücksichtigung der gegenseitigen Korelation der weiteren Meßgrößen gemeinsam bestimmt werden. Besonders vorteilhaft ist es natürlich, sowohl die Temperaturmeßgröße als auch die weiteren Meßgrößen gemeinsam in einem entsprechenden Vielkanal-Analysator zu registrieren. Damit sind nach jeder vollendeten Messung statistische Aussagen über die Häufigkeit beliebiger, eindeutig charakterisierter Betriebszustände möglich. Insbesondere können Meßwerte, die offensichtlich transienten Zuständen entsprechen und somit keine verwertbare Aussage darstellen, von der weiteren Analyse ausgeschlossen werden.

Eine zweite erfindungsgemäße Lösung der Aufgabe ist gegeben durch ein Verfahren zur Überwachung der katalytischen Aktivität eines von Abgas durchströmbaren Katalysators im Abgassystem einer Brennkraftmaschine durch eine beim Betrieb der Brennkraftmaschine mittels eines Maschinenüberwachungssystems periodisch wiederholte Messung unter Einbeziehung folgender Maßnahmen:
a) Bestimmung einer Temperaturmeßgröße aus Signalen zumindest zweier Temperaturmeßfühler, die dem Katalysator zugeordnet sind;
b) Bestimmung weiterer Meßgrößen, die den Betrieb der Brennkraftmaschine charakterisieren;
c) Bestimmung eines Temperaturgrenzwertes aus den weiteren Meßgrößen;
d) Bestimmung der Aktivität durch Vergleich der Temperaturmeßgrößen mit dem Temperaturgrenzwert, und Abgabe einer Meldung, falls die Temperaturmeßgröße kleiner als der Temperaturgrenzwert ist.

Im Rahmen der erstgenannten erfindungsgemäßen Lösung der Aufgabe im Rahmen sämtlicher Ausgestaltungen werden ausgesprochene Langzeit-Messungen vorgenommen, mit denen grundsätzlich eine statistische Mittelung über sämtliche im Laufe einer Messung aufgetretenen Betriebszustände der Brennkraftmaschine und des Katalysators angestrebt wird. Auf diese Weise werden Meßgrößen erhalten, die weitgehend unabhängig von speziellen Betriebszuständen sind und daher mit ausreichender Sicherheit eine allgemeine Aussage erlauben, ob die Aktivität des Katalysators noch als ausreichend zu beurteilen ist oder nicht. Im Rahmen der zweitgenannten erfindungsgemäßen Lösung wird darauf abgestellt, im Rahmen kurzfristiger Messungen (wobei der Zeitaufwand für eine Messung in der Größenordnung von Sekunden liegt) durch die Berücksichtigung weiterer Meßdaten, aus denen der Betriebszustand von Brennkraftmaschine und Katalysator ableitbar ist, die am Katalysator aufgenommenen Temperaturmeßgrößen zu bewerten und aus ihnen eine Aussage über die Aktivität des Katalysators zu gewinnen, die unabhängig von dem speziellen Betriebszustand, bei dem die Messung erfolgte, ist. Das erste erfindungsgemäße Verfahren kann im übrigen auch vorteilhaft mit dem zweiten erfindungsgemäßen Verfahren kombiniert werden, beispielsweise in der Weise, daß die langfristige Entwicklung der im Rahmen des zweiten erfindungsgemäßen Verfahrens gewonnenen Aussagen beobachtet wird.

Es ist weiterhin möglich, einen speziellen Betriebszustand oder mehrere spezielle Betriebszustände aufgrund vorgegebener Werte für die weiteren Meßgrößen auszuwählen und die Aktivität des Katalysators jeweils nur für solche speziellen Betriebszustände zu bestimmen. Als spezielle Betriebszustände kommen solche Betriebszustände in Frage, die mit hinreichender Wahrscheinlichkeit bei jeder zu überwachenden Brennkraftmaschine vorkommen - im Falle eines Kraftfahrzeuges beispielsweise Leerlauf, Fahrbetrieb auf einer Landstraße, langsames Beschleunigen usw. Vorteilhafterweise kann zur Bestimmung der Aktivität über mehrere solcher Betriebszustände ein Mittelwert gebildet werden.

Besonders vorteilhaft ist es, im Rahmen des zweiten erfindungsgemäßen Verfahrens zur Bestimmung des Temperaturgrenzwertes bei jeder Messung außer den vorliegenden weiteren Meßgrößen zumindest eine im Rahmen einer früheren Messung ermittelte Temperaturmeßgröße zu berücksichtigen. Insgesamt wird damit die Möglichkeit eröffnet, zur Bestimmung des Temperaturgrenzwertes auf den mittelfristigen oder langfristigen zeitlichen Verlauf der Temperaturmeßgröße Rücksicht zu nehmen und somit den jeweiligen Temperaturgrenzwert im Einzelfall an den Katalysator und die Umstände seiner Beanspruchung anzupassen.

Besonders günstig ist es, die im Rahmen des erfindungsgemäßen Verfahrens bestimmte Aktivität des Katalysators über einen langfristigen Zeitraum zu registrieren unu die somit verfügbaren Informationen zur jeweiligen Bestimmung des Temperaturgrenzwertes zu berücksichtigen. Dies ist insbesondere dann vorteilhaft, wenn nicht der gesamte Katalysator im Rahmen des Überwachungsverfahrens beobachtet wird, sondern lediglich ein Segment des Katalysators. Ist der Katalysator neu, so ist z. B. die beobachtete Aktivität eines Segmentes im Ausströmbereich des Katalysators gering, denn die Umsetzung erfolgt praktisch vollständig in den Bereichen des Katalysators in der Nähe des Einströmendes, das von dem das Abgassystem durchströmenden Abgas als erstes erreicht wird. Mit dem Aktivitätsverlust der anfänglich aktiven Bereiche des Katalysators steigt die Aktivität des überwachten Segmentes; sie erreicht nach einer gewissen Zeit ein Maximum und nimmt dann wieder ab als Folge der Alterung. Die langfristige Überwachung der Aktivität des Segmentes erlaubt eine sehr feinfühlige Anpassung des Temperaturgrenzwertes; unmittelbar nach Inbetriebnahme des Katalysators kann keine Überwachung stattfinden; nach einer gewissen Zeit, nachdem die Aktivität eine gewisse Schwelle überschritten hat, kann der Temperaturgrenzwert sehr großzügig gewählt werden zur Erkennung eventueller "Vergiftungserscheinungen". Mit der einsetzenden Abnahme der Aktivität ist schließlich eine sehr feinfühlige Justierung des Temperaturgrenzwertes möglich.

Die schwierige Auswertbarkeit einer Messung, die bei einem transienten Betriebszustand vorgenommen wurde, ist bereits eingehend erläutert worden. Ensprechend ist es besonders vorteilhaft, die Meßsignale der Temperaturmeßfühler und/oder der weiteren Meßfühler auf solche Transienten, deren sicheres Kennzeichen ein zeitlich in nennenswertem Umfang variables Signal ist, zu überwachen. Günstigerweise wird die Messung ausgesetzt, wenn die zeitliche Ableitung zumindest eines Signals wesentlich von Null abweicht. Damit jedenfalls ist sichergestellt, daß zur Überwachung des Katalysators nur Messungen bei im wesentlichen stationärem Zustand berücksichtigt werden.

Überraschenderweise ist es nicht unmöglich, die im Rahmen bestimmter ausgewählter Transienten ermittelbaren Meßgrößen auszuwerten; namentlich ist eine günstige Weiterbildung des zweiten erfindungsgemäßen Verfahrens dadurch gekennzeichnet, daß
a) das Signal eines ersten Temperaturmeßfühlers auf sprunghafte Veränderungen überwacht wird;
b) beim Auftreten einer sprunghaften Veränderung das Signal eines zweiten Temperaturmeßfühlers über einen kurzen Zeitraum beobachtet wird;
c) aus den zeitlichen Veränderungen des Signals des zweiten Temperaturmeßfühlers die Temperaturmeßgröße gebildet wird.

Der kurze Zeitraum hat dabei vorteilhafterweise eine Dauer von höchstens etwa 3 Sek., vorzugsweise zwischen etwa 1 Sek. und etwa 2 Sek.

Auswertbar sind dementsprechend "sprunghafte" Transienten, die in kurzer Zeit die Brennkraftmaschine von einem ersten stationären Betriebszustand in einen zweiten stationären Betriebszustand überführen. Daß dies der Fall ist, muß gegebenenfalls durch entsprechende Auswertung der weiteren Meßgrößen sichergestellt werden. Ein erster Temperaturmeßfühler ist im vorliegenden Fall vorzugsweise ein Meßfühler, der sich vor der Anströmseite des Katalysators befindet und der eine geringe thermische Trägheit aufweist, so daß sprunghafte Anderungen der Abgastemperatur mit ihm schnell erkennbar sind. Der zweite Temperaturmeßfühler ist im Inneren des Katalysators oder hinter dem Ausströmende des Katalysators angeordnet; auszuwerten ist die zeitliche Änderung des Signals des zweiten Temperaturmeßfühlers, die die Änderung der thermischen und katalytischen Verhältnisse im Katalysator repräsentiert. Sichergestellt werden muß auch im Rahmen der Überwachung durch Auswertung einfacher transienter Zustände, daß während der Messung keine weitere, das Meßergebnisse verfälschende Transiente auftritt.

Die weitere Erläuterung der Erfindung erfolgt anhand der Zeichnung; die dargestellten Ausführungsbeispiele dienen lediglich der Illustration, ohne daß damit eine Einschränkung des beanspruchten Schutzes für die vorliegende Erfindung verbunden sein soll. Im einzelnen zeigen:
Figur 1 eine Anordnung mit Brennkraftmaschine, Abgassystem und Katalysator, eingerichtet zur Anwendung des erfindungsgemäßen Verfahrens;
Figur 2, Figur 3, Figur 4 und Figur 5 Beispiele, wie ein erfindungsgemäß überwachbarer Katalysator mit Temperaturmeßfühlern realisiert werden kann;
Figur 6 eine Skizze der Temperaturverteilung im Inneren eines Katalysators während des Betriebs;
Figur 7 eine Skizze der Temperaturverteilung auf der Mantelfläche eines Katalysators während des Betriebs. Zur Vereinfachung der Beschreibung sind gleichwirkende Komponenten in allen Figuren jeweils mit demselben Bezugszeichen versehen.

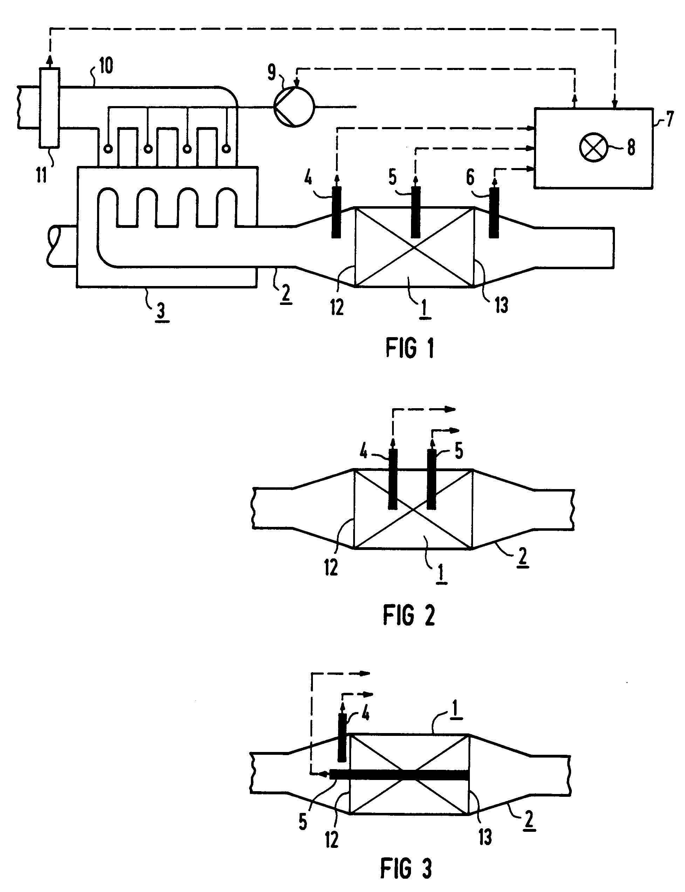

Figur 1 zeigt schematisiert eine Brennkraftmaschine 3 mit einem Abgassystem 2, in dem sich ein Katalysator 1 befindet. Der Katalysator 1 ist versehen mit Temperaturmeßfühlern 4, 5 und 6, die beispielsweise Thermoelemente oder temperaturveränderliche elektrische Widerstände sein können. Die Temperaturmeßfühler 4, 5, 6 sind verbunden mit einem Maschinenüberwachungssystem 7, beispielsweise einer entsprechend erweiterten Motorsteuerungselektronik, die alle zum Betrieb der Brennkraftmaschine 3 notwendigen Meßdaten aufnimmt und weiterverarbeitet. In dem Maschinenüberwachungssystem 7 befindet sich die Vorrichtung, in der beim Betrieb der Brennkraftmaschine 3 das erfindungsgemäße Verfahren zur Überwachung der katalytischen Aktivität des von Abgas durchströmten Katalysators 1 abläuft. Die Meldung, die von dem Maschinenüberwachungssystem 7 im Falle des Nachweises einer ungenügenden Aktivität des Katalysators 1 abzugeben ist, besteht in der Regel in der Aktivierung einer Anzeigevorrichtung 8, beispielsweise einer Kontrollampe. Es ist natürlich auch denkbar, die Meldung anderweitig weiterzuverarbeiten, im Extremfall beispielsweise den weiteren Betrieb der Brennkraftmaschine 3 vollständig zu unterbinden. Zur betrieblichen Steuerung der Brennkraftmaschine 3 erhält das Maschinenüberwachungssystem 7 von entsprechenden Gebern in der Brennkraftmaschine 3 die notwendigen Daten; in Figur 1 ist beispielhaft das Frischgassystem 10 zur Zuführung unverbrannter Luft zur Brennkraftmaschine 3 versehen mit einem Luftmengenmesser 11, der den Massendurchsatz der zur Brennkraftmaschine 3 strömenden Luft bestimmt und dem Maschinenüberwachungssystem 7 mitteilt. Weitere Meßaufnehmer sind der Einfachheit halber nicht dargestellt; insbesondere sind in der Regel Einrichtungen zur Messung der Betriebsfrequenz (bzw. der Drehzahl) der Brennkraftmaschine 3 usw. vorhanden. Die Steuerfunktionen des Maschinenüberwachungssystems 7 bestehen beispielsweise in der Kraftstoffzumessung; entsprechend ist die Kraftstoffpumpe 9 von dem Maschinenüberwachungssystem 7 beeinflußbar. Der Übersichtlichkeit halber nicht dargestellt ist ein Zündsystem für die Brennkraftmaschine 3; seine jeweilige Notwendigkeit liegt auf der Hand, so daß sich weitere Ausführungen hierzu erübrigen. In Figur 1 ist der Katalysator 1 versehen mit einem ersten Meßfühler 4, der vor dem Einströmende 12, an dem die von der Brennkraftmaschine 3 abströmenden Abgase in dem Katalysator 1 eintreten, angeordnet ist. Ein zweiter Temperaturmeßfühler 5 befindet sich im Inneren des Katalysators 1, im vorliegenden Beispiel in der Mitte, und ein dritter Temperaturmeßfühler 6 ist hinter dem Ausströmende 13, durch das die Abgase dem Katalysator 1 wieder verlassen, plaziert. Ohne die Funktion des ersten Temperaturmeßfühlers 4 und des zweiten Temperaturmeßfühlers 6 wesentlich zu beeinträchtigen, könnten diese auch im Inneren des Katalysators 1, jeweils in der Nähe des Einströmendes 12 bzw. des Ausströmendes 13, angeordnet sein. Mit den dargestellten drei Meßfühlern 4, 5, 6 ist eine mehrfache Überwachung des Katalysators 1 möglich. Unter Berücksichtigung der Signale des ersten Temperaturmeßfühlers 4 und des zweiten Temperaturmeßfühlers 5 kann die Aktivität des Katalysators 1 vom Einströmende 12 bis zur Mitte des Katalysators 1 überwacht werden; ist der Katalysator 1 neu, so ist die Aktivität hoch, mit zunehmender Alterung des Katalysators 1 läßt die Aktivität nach. Mit dem zweiten Temperaturmeßfühler 5 und dem dritten Temperaturmeßfühler 6 kann die Aktivität des bereiches von der Mitte des Katalysators 1 bis zum Ausströmende 13 überwacht werden; sie ist für einen neuen Katalysator 1 zunächst klein, steigt im Laufe der Abnutzung aufgrund des Ausfalls des anfangs aktiven Segmentes des Katalysators an und fällt dann aufgrund einsetzender Alterungserscheinungen wieder ab. Unter "Aktivität" wird hier nicht ein theoretisches katalytisches Leistungsvermögen des Katalysators 1 verstanden; die Aktivität entspricht der im tatsächlichen Betrieb erzielten Umsetzungsrate der Schadstoffe im Abgas zu unschädlichen Stoffen. Die theoretische Umsetzungsfähigkeit eines Katalysators ist natürlich vom Zeitpunkt der Inbetriebnahme an einer steten Abnahme durch Alterung unterworfen; solange sie jedoch über einem kritischen Wert liegt, wäre die mit dem Uberwachungssystem gemäß der Erfindung zu messende Aktivität konstant. Erst mit der meßbaren Abnahme der Aktivität entspricht die Aktivität unmittelbar der maximalen Umsetzungsfähigkeit des Katalysators 1. Die Realisierung der Überwachung mit einer Anordnung von Meßfühlern 4, 5, 6 wie dargestellt in Figur 1 ist selbstverständlich möglich mit allen drei möglichen Paaren von Meßfühlern 4, 5, 6. Lediglich wird langfristig, über einen Benutzungszeitraum von mehreren 100 bis mehreren 1.000 Std., jeweils ein anderer Verlauf der Aktivität gemessen. In jedem Falle aber ergibt sich langfristig eine sinkende Aktivität, die auf das Erreichen eines je nach der realisierten Konfiguration zu wählenden Grenzwertes überwacht werden muß. Ist dieser Grenzwert erreicht, ist die vorgesehene Meldung abzugeben. Die in Figur 1 als möglich aufgezeigten Meßkonfigurationen gestatten dabei jedwede Ausgestaltung der erfindungsgemäßen Überwachung. Für den Fall der Langzeit-Messungen ist dies unmittelbar klar; sollen Kurzzeit-Messungen realisiert werden, so ist eine Konfiguration unter Verwendung des ersten Themoelementes 4 und des dritten Thermoelementes 6 möglicherweise nachteilig, am günstigsten ist in diesem Falle eine Meßkonfiguration mit dem ersten Temperaturmeßfühler 4 und dem zweiten Temperaturmeßfühler 5. Dies deshalb, weil der erste Temperaturmeßfühler 4 am ehesten in der Lage ist, einen abrupten Temperaturwechsel in dem zum Katalysator 1 strömenden Abgas festzustellen; dementsprechend kann auch seine Konstruktion auf möglichst geringe thermische Trägheit abgestimmt sein. Der zweite Temperaturmeßfühler 5 sollte für die Kurzzeit-Messung, insbesondere für die Kurzzeit-Messung mit Auswertung von Transienten, nicht allzuweit von dem ersten Temperaturmeßfühler 4 postiert werden. Wie bereits ausgeführt, werden Änderungen der Strömungsgeschwindigkeit des Abgases in kürzester Zeit (mit Schallgeschwindigkeit) durch den Katalysator 1 transportiert, Temperaturänderungen jedoch langsam, im Zeitrahmen mehrerer Sekunden. Das Signal des zweiten Temperaturmeßfühlers 5 ändert sich daher nicht nur wesentlich langsamer als das Signal des ersten Temperaturmeßfühlers 4, sondern zwischen den jeweiligen Änderungen liegt eine Verzögerung in der Größenordnung einiger Sekunden. Diese Verzögerung muß eventuell in dem Maschinenüberwachungssystem 7 berücksichtigt, gegebenenfalls korrigiert, werden.

Figur 2 zeigt eine weitere Ausführungsmöglichkeit zur Zuordnung eines ersten Temperaturmeßfühlers 4 und eines zweiten Temperaturmeßfühlers 5 zu einem in einem Abgassystem 2 befindlichen Katalysator 1. Beide Meßfühler 4, 5 sind im dargestellten Beispiel im Inneren des Katalysators 1 angeordnet. Mit dieser Anordnung lassen sich sowohl Langzeit-Messungen als auch Kurzzeit-Messungen ausführen; aufgrund der notwendigerweise vorhandenen thermischen Trägheit des Bereiches zwischen Einströmende 12 und erstem Temperaturmeßfühler 4 ist jedoch ein Meßverfahren mit Auswertung transienter Betriebszustände weniger günstig. Zur Korrektur des Einflusses eventueller transienter Betriebszustände werden die Signale der Meßfühler 4, 5 günstigerweise mit einer Zeitkonstante von der Größenordnung einiger Sekunden integriert; dies kann entweder elektronisch erfolgen (Verwendung von Tiefpässen), auch können jedoch vorteilhaft Temperaturmeßfühler 4, 5 mit entsprechend hoher thermischer Trägheit verwendet werden (Thermoelemente, die von entsprechend massiven Hülsen umgeben sind, Widerstandsdrähte, die in die Struktur des Katalysators 1 eingebettet sind oder dergleichen).

Figur 3 zeigt eine Anordnung, in der ein erster Temperaturmeßfühler 4 vor dem Einströmende 12 des Katalysators 1 im Abgassystem 2 angeordnet ist und ein zweiter Meßfühler 5 sich durch den Katalysator 1 vom Einströmende 12 zum Ausströmende 13 erstreckt. Auf die konstruktive Auslegung des Temperaturmeßfühlers 5 und auf seine Einbindung in den Katalysator 1 kommt dabei weniger an; der zweite Meßfühler 5 braucht nicht unbedingt in der Mitte des Katalysators 1 zu liegen, er braucht auch nicht gerade zu sein (beispielsweise wäre, je nach Konstruktion des Katalysators 1, eine spiralige Ausführung denkbar). Im übrigen sind wie im dargestellten Fall Meßfühler 4, 5 mit gewissen räumlichen Ausdehnungen senkrecht zur Richtung des strömenden Abgases durchaus vorteilhaft, wenn es nicht gerade auf eine möglichst geringe thermische Trägheit (wie erforderlich zur Realisierung des erfindungsgemäßen Verfahrens mit Auswertung von Transienten) ankommt. Im allgemeinen ist die Beaufschlagung eines Katalysators 1 mit Abgas senkrecht zur Strömungsrichtung des Abgases durchaus inhomogen, und durch Verwendung "ausgedehnter" Meßfühler 4, 5 werden Aussage über die über gewisse Bereiche des Katalysators 1 gemittelten Verhältnisse erzielt, die besser als Aussagen über räumlich streng begrenzte Verhältnisse reproduzierbar und übertragbar sind.

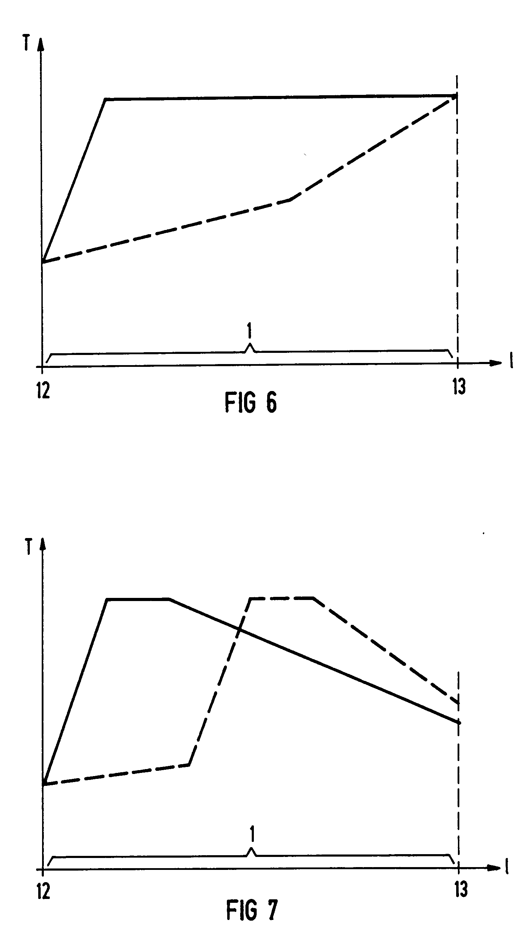

Das Meßsystem gemäß Figur 3 ist für Kurzzeit-Messungen weniger geeignet; es dient zu Langzeit-Messungen, wie anhand von Figur 6 später beschrieben.

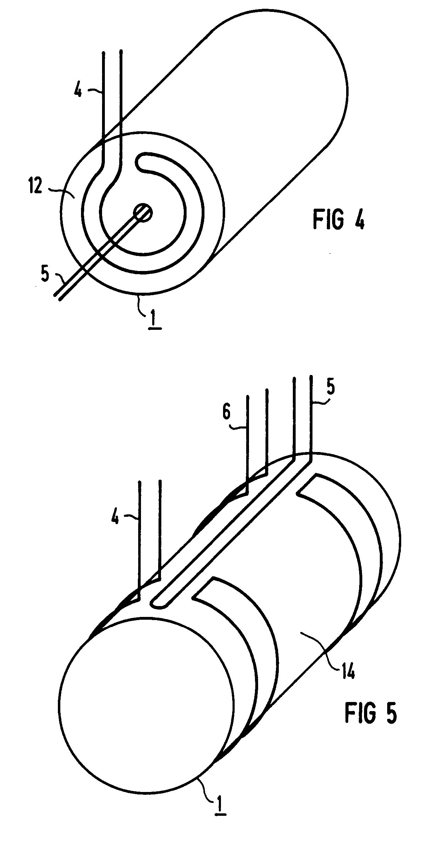

Figur 4 zeigt eine spezielle Ausbildung der in Figur 3 schematisch dargestellten Konfiguration. Beide Temperaturmeßfühler 4, 5 sind ausgeführt als schleifenförmige Widerstandsdrähte, deren elektrischer Widerstand jeweils temperaturabhängig ist. Ein erster Meßfühler 4 ist auf das Einströmende 12 des Katalysators 1 aufgelegt und auf diesem befestigt, oder anderweitig in unmittelbare Nähe des Einströmendes 12 gebracht. Der zweite Meßfühler 5 verläuft im Inneren des Katalysators 1.

Eine prinzipiell den Konfigurationen gemäß Figur 3 und Figur 4 ähnelnde Ausführung eines Katalysators 1 mit Temperaturmeßfühlern 4, 5, 6 ist dargestellt in Figur 5. Zunächst befindet sich der zweite Temperaturmeßfühler 5 nicht im Inneren des Katalysators 1 sondern er ist auf der Mantelfläche 14 aufgebracht. Gleiches gilt für einen ersten Temperaturmeßfühler 4 und einen dritten Temperaturmeßfühler 6. Die Ausführung gemäß Figur 5 ist besonders günstig deshalb, weil sie keine Veränderungen im Inneren des Katalysators 1 erfordert; sie ist besonders vorteilhaft bei einem Katalysator 1 mit metallischem Trägerkörper, der üblicherweise ohnehin ein festes Mantelrohr aufweist, dessen Außenfläche die Mantelfläche 14 bildet. Auf einem solchen Katalysator 1 sind Widerstandsdrähte leicht befestigbar und, im Falle der Beschädigung, leicht austauschbar. Erster Temperaturmeßfühler 4 und dritter Temperaturmeßfühler 6 sind jeweils in der Nähe eines Endes des Katalysators 1 auf der Mantelfläche 14 aufgewickelt. Für alle drei Meßfühler 4, 5, 6 sind einfache Haarnadelschleifen von Widerstandsdrähten gezeigt; die Haarnadelschleifen können selbstverständlich durch anderweitige Wicklungen, insbesondere dann, wenn größere Drahtlängen erforderlich sind, ersetzt werden, ohne daß damit eine Beeinträchtigung der Funktion verbunden wäre.

In Figur 6 ist die Temperaturverteilung im Inneren eines Katalysators 1 bei stationärem Betrieb dargestellt. Auf der Abszisse ist der vom Einströmende 12 zum Ausströmende 13 durch den Katalysator 1 verlaufende Weg dargestellt, entlang der Ordinate wird die jeweilige Temperatur eingetragen. Die Temperatur des in den Katalysator 1 einströmenden Abgases muß einen Wert haben, der oberhalb der Mindesttemperatur, die zum Betrieb des Katalysators 1 erforderlich ist, liegt. Der durchgezogene Graph stellt den Verlauf der Temperatur für einen relativ neuen Katalysator 1 dar. Die Temperatur steigt unmittelbar hinter dem Einströmende 12 (entsprechend dem Nullpunkt im Diagramm) sehr rasch an und erreicht alsbald einen Maximalwert, der, entsprechend der Wärmeleitfähigkeit des Katalysators 1 und dem durch das strömende Abgas vermittelten Wärmetransport, bis zum Ausströmende 13 etwa konstant bleibt. Der gestrichelte Graph stellt den Temperaturverlauf für einen stark gealterten Katalysator 1 dar; von dem Einströmende 12 weg steigt die Temperatur nur langsam an; die Aktivität der Bereiche im Katalysator 1 unmittelbar hinter dem Einströmende 12 ist sehr stark abgesunken, ganz verschwindet sie allerdings nicht. Erst in Bereichen in der Nähe des Ausströmendes 13 tritt aufgrund noch vorhandener Aktivität einen deutliche Temperaturerhöhung ein. Im Rahmen einer Anordnung von Temperaturmeßfühlern in Form von Widerstandsdrähten gemäß Figur 3 oder Figur 4 würde das erste Thermoelement 4 die Temperatur des Katalysators am Einströmende 12 messen; der zweite Meßfühler 5 mißt einen über die gesamte Länge des Katalysators 1 gemittelten Wert für die Temperatur, entsprechend dem Integral des in Figur 6 dargestellten Graphen. Ist der Katalysator 1 noch voll funktionsfähig, so würden erster Temperaturmeßfühler 4 und zweiter Temperaturmeßfühler 5 im wesentlichen gleiche Temperaturen messen. Ist die Alterung des Katalysators 1 fortgeschritten, so mißt der erste Meßfühler 4 eine deutlich niedrigere Temperatur als der zweite Meßfühler 5. Die somit auftretende Temperaturdifferenz ist ein Maß für die Alterung des Katalysators 1; sie ist zunächst gering, steigt mit zunehmender Benutzung an und sinkt schließlich, wenn der Katalysator 1 über seine gesamte Länge an Aktivität verloren hat, wieder ab - im Extremfall, wenn der Katalysator 1 seine Aktivität vollständig verloren hat, liegt keine Temperaturdifferenz mehr vor. Die Aktivität des Katalysators 1 muß alsbald als unzureichend angesehen werden, wenn die - auf Einflüsse durch den speziellen Betriebszustand der Brennkraftmaschine korrigierte - Temperaturdifferenz ihr Maximum durchlaufen hat; entsprechend muß der Grenzwert ausgewählt werden.

Figur 7 zeigt den Temperaturverlauf auf dem Mantel eines Katalysators 1, wobei die Art der Darstellung dieselbe ist wie in Figur 6. Wesentlich ist, daß die Temperatur nach dem Erreichen ihres Maximums nicht im wesentlichen konstant bleibt, sondern daß die Temperatur hinter der Zone des Katalysators 1, in der die katalytische Reaktion hauptsächlich stattfindet, wieder abnimmt. Dies ist in erster Linie auf Wärmeverluste durch Strahlung zurückzuführen; hinter der aktiven Zone findet keine Wärmeentwicklung mehr statt, so daß die Temperatur des Katalysators 1 im Bereich des Mantels hinter der aktivsten Zcne wieder abnimmt. Entsprechend kann eine langfristige Überwachung auch in der Weise erfolgen, daß die Lage der Zone höchster Temperatur auf dem Mantel bestimmt wird. Dies erfolgt im Rahmen der Erfindung beispielsweise mit einer Anordnung gemäß Figur 5. Diese Anordnung kann je nach Anforderung dahingehend verbessert werden, daß eine Vielzahl von Temperaturmeßstellen auf dem Mantel des Katalysators 1 vorgesehen wird, so daß jederzeit die räumliche Temperaturverteilung bestimmbar ist.

## Patentansprüche

1. Verfahren zur Überwachung der katalytischen Aktivität eines von Abgas durchströmbaren Katalysators (1) im Abgassystem (2) einer Brennkraftmaschine (3) durch eine beim Betrieb der Brennkraftmaschine (3) mittels eines Maschinenüberwachungssystems (7) periodisch wiederholte Messung unter Bestimmung einer Temperaturmeßgröße aus Signalen zumindest zweier, in Strömungsrichtung beabstandeter Temperaturmeßfühler (4, 5, 6), die im Katalysator (1) oder in seiner Umgebung angeordnet sind, wobei die katalytische Aktivität durch Vergleich mit einem vorgegebenen Grenzwert ermittelt wird und eine Meldung erfolgt, falls der Grenzwert unterschritten wird,
dadurch gekennzeichnet,
daß eine Mittelwertbildung der Temperaturmeßgröße über einen für die Herausmittelung von speziellen Beanspruchungen genügend langen Zeitraum des Betriebes der Brennkraftmaschine unter Bildung eines Temperaturmittelwertes erfolgt und die katalytische Aktivität durch Vergleich dieses Temperaturmittelwertes mit einem vorgegebenen Grenzwert ermittelt wird.

2. Verfahren nach Anspruch 1, wobei der Beobachtungs- Zeitraum jeweils zumindest etwa 10 Std., vorzugsweise zwischen etwa 100 Std. und etwa 1.000 Std. umfaßt, während derer die Brennkraftmaschine (3) in Betrieb ist.

3. Verfahren nach Anspruch 1 oder 2, wobei
a) die Temperaturmeßgröße in Zeitabständen, die wesentlich kleiner als der Beobachtungs- Zeitraum sind, periodisch bestimmt und in einem Speicher eines zu dem Maschinenüberwachungssystem (7) gehörigen Vielkanal-Analysators registriert wird;
b) nach Ablauf des Beobachtungs- Zeitraums zur Bildung des Temperaturmittelwertes der Inhalt des Speichers herangezogen wird;
c) der Speicher gelöscht wird.

4. Verfahren nach Anspruch 1 oder 2, wobei die Temperaturmeßgröße über den Beobachtungs- Zeitraum hinweg zur Bildung des Temperaturmittelwertes integriert wird.

5. Verfahren nach einem der Ansprüche 1 bis 4, wobei
a) beim Betrieb der Brennkraftmaschine (3) weitere Meßgrößen gebildet werden, die den Betriebszustand der Brennkraftmaschine (3) charakterisieren;
b) die weiteren Meßgrößen jeweils über den Beobachtungs- Zeitraum beobachtet werden, unter Bildung weiterer Mittelwerte;
c) der Grenzwert unter Berücksichtigung der weiteren Mittelwerte bestimmt wird.

6. Verfahren nach Anspruch 5, wobei
a) die weiteren Meßgrößen periodisch registriert und in einem mehrdimensionalen Vielkanal-Analysator gespeichert werden;
b) nach Ablauf des Beobachtungs- Zeitraums der Inhalt des mehrdimensionalen Vielkanal-Analysators zur Bildung der weiteren Mittelwerte herangezogen wird;
c) der mehrdimensionale Vielkanal-Analysator gelöscht wird.

7. Verfahren nach Anspruch 6, wobei die Temperaturmeßgröße gemeinsam mit den weiteren Meßgrößen periodisch registriert und in dem mehrdimensionalen Vielkanal-Analysator gespeichert wird.

8. Verfahren zur Uberwachung der katalytischen Aktivität eines von Abgas durchströmbaren Katalysators (1) im Abgassystem (2) einer Brennkraftmaschine (3) durch eine beim Betrieb der Brennkraftmaschine (3) mittels eines Maschinenüberwachungssystems (7) periodisch wiederholte Messung unter Bestimmung einer Temperaturmeßgröße aus Signalen zumindest zweier Temperaturmeßfühler (4, 5, 6), die dem Katalysator (1) zugeordnet sind; gekennzeichnet durch Einbeziehung folgender Maßnahmen:
a) Bestimmung weiterer Meßgrößen, die den jeweiligen Betrieb szustand der Brennkraftmaschine (3) charakterisieren;
b) Bestimmung eines Temperaturgrenzwertes aus den weiteren Meßgrößen;
c) Bestimmung der Aktivität durch Vergleich der Temperaturmeßgröße mit dem Temperaturgrenzwert, und Abgabe einer Meldung, falls die Temperaturmeßgröße kleiner als der Temperaturgrenzwert ist.

9. Verfahren nach Anspruch 8, wobei zur Bestimmung des Temperaturgrenzwertes außer den weiteren Meßgrößen zumindest eine in einer früheren Messung ermittelte Temperaturmeßgröße verwendet wird.

10. Verfahren nach Anspruch 9, wobei jeweils über einen für die Herausmittelung von speziellen Beanspruchungen genügend langen Zeitraum die Aktivität registriert und zur jeweiligen Bestimmung des Temperaturgrenzwertes berücksichtigt wird.

11. Verfahren nach einem der Ansprüche 8 bis 10, wobei die TemperaturmeOgröOe der Differenz der Temperaturen, die von den zwei Temperaturmeßfühlern (4, 5, 6) gemessen werden, entspricht.

12. Verfahren nach einem der Ansprüche 8 bis 11, wobei
a) die zeitliche Ableitung zumindest eines Signals gebildet wird;
b) die Messung gehemmt wird, falls die zeitliche Ableitung wesentlich von Null abweicht.

13. Verfahren nach einem der Ansprüche 8 bis 10, wobei
a) das Signal eines ersten Temperaturmeßfühlers (4) auf sprunghafte Veränderungen überwacht wird;
b) beim Auftreten einer sprunghaften Veränderung das Signal eines zweiten Temperaturmeßfühlers (5) über einen kurzen Zeitraum beobachtet wird;
c) aus den zeitlichen Veränderungen des Signals des zweiten Temperaturmeßfühlers (5) die Temperaturmeßgröße gebildet wird.

14. Verfahren nach Anspruch 13, wobei der kurze Zeitraum eine Länge von höchstens etwa 3 Sek., vorzugsweise zwischen etwa 1 Sek. und etwa 2 Sek., hat.

## Claims

1. Method for monitoring the catalytic activity of a catalyst (1) through which exhaust gas can flow in the exhaust system (2) of an internal combustion engine (3), by means of periodically repeated measurement while the engine (3) is running, by an engine monitoring system (7), by determination of a temperature measurement from signals from at least two temperature sensors (4, 5, 6) spaced apart in the direction of the flow, which are arranged in the catalyst (1) or in the proximity thereof, whereby the catalytic activity is determined by comparison with a previously given limit and a message follows if the limit is not reached, characterised in that the averaging process for the measured temperature value is done by establishing an average temperature value over a sufficiently long period of engine running time for averaging out special stresses, and the catalytic activity is sensed by comparison of this average temperature with a pre-determined limit.

2. Method according to claim 1, whereby the observation time is always of at least approximately 10 hours, preferably between approximately 100 and approximately 1,000 hours, during which the internal combustion engine (3) is running.

3. Method according to claim 1 or 2, whereby
a) the measured temperatures are periodically determined in intervals which are substantially smaller than the observation time, and are registered in a memory of a multi-channel analyser of the engine monitoring system (7);
b) after the observation time, the content of the memory is consulted to establish the average temperature;
c) the memory is erased.

4. Method according to claim 1 or 2, whereby for establishing the average temperature, the measured temperature over and above the observation time is integrated.

5. Method according to one of claims 1 to 4, whereby
a) during running of the internal combustion engine (3) further measurements are established which characterise the operating condition of the internal combustion engine (3);
b) the further measurements are always observed over the observation time, and further averages are established;
c) the limit is determined having regard to the further averages.

6. Method according to claim 5, whereby
a) the further measurements are periodically registered and stored in a multi-dimensional multi-channel analyser;
b) after the observation time, the content of the multi-dimensional multi-channel analyser is consulted to establish further averages;
c) the multi-dimensional multi-channel analyser is erased.

7. Method according to claim 6, whereby the temperature measurement is periodically registered together with the further measurements and stored in the multi-dimensional multi-channel analyser.

8. Method for monitoring the catalytic activity of a catalyst (1) through which exhaust gas can flow in the exhaust system (2) of an internal combustion engine (3), by means of periodically repeated measurement while the engine (3) is running by an engine monitoring system (7), by determination of a measured temperature from signals from at least two temperature sensors (4, 5, 6) which are assigned to the catalyst (1), characterised by inclusion of the following steps:
a) determination of further measurements, which characterise the current operating conditions of the internal combustion engine (3);
b) determination of a temperature limit from the further measurements;
c) determination of the activity by comparison of the measured temperature values with the temperature limit, and giving a message if the temperature measurement is lower than the temperature limit;

9. Method according to claim 8, whereby for determining the temperature limit, in addition to the further measurements at least one temperature measurement sensed in a previous measurement is used.

10. Method according to claim 9, whereby the activity is always registered over a period of time sufficiently long for averaging out special stresses, and is considered in determining the temperature limit.

11. Method according to one of claims 8 to 10, whereby the temperature measurement corresponds to the difference between the temperatures measured by the two temperature sensors (4, 5, 6).

12. Method according to one of claims 8 to 11, whereby
a) the time derivation of at least one signal is established;
b) measurement is stopped if the time derivation differs substantially from nil;

13. Method according to one of claims 8 to 10, whereby
a) the signal of a first temperature sensor (4) is monitored for rapid changes;
b) if a rapid change occurs, the signal of a second temperature sensor (5) is observed over a short period of time;
c) the temperature measurement is established by the periodic changes in the signal of the second temperature sensor (5).

14. Method according to claim 13, whereby the short period of time is at the most approximately 3 seconds, preferably between approximately 1 second and approximately 2 seconds.

## Revendications

1. Procédé pour surveiller l'activité catalytique d'un catalyseur (1) traversable par un gaz d'échappement dans un système d'échappement (2) d'une machine à combustion (3) par l'intermédiaire d'une mesure périodiquement répétée en cours de fonctionnement de la machine à combustion (3) au moyen d'un système de surveillance de machine (7) en établissant une grandeur de mesure de température à partir de signaux d'au moins deux capteurs de mesure de température (4, 5, 6) répartis sur une direction de flux et disposés dans le catalyseur (1) ou à son voisinage, dans lequel on détermine l'activité catalytique par comparaison avec une valeur limite prédéterminée et on élabore un message au cas où la valeur limite est franchie,
caractérisé en ce que
l'on opère une élaboration de valeur moyenne de la grandeur de mesure de température par élaboration d'une valeur moyenne de température sur une durée de fonctionnement de la machine à combustion suffisamment longue pour permettre l'élimination de restrictions particulières et on détermine l'activité catalytique par comparaison de cette valeur moyenne de température avec une valeur limite prédéterminée.

2. Procédé selon la revendication 1, dans lequel chaque durée d'observation couvre au moins 10 heures, de préférence entre environ 100 heures et environ 1000 heures, pendant lesquelles la machine à combustion (3) est en fonctionnement.

3. Procédé selon la revendication 1 ou 2, dans lequel
(a) les grandeurs de mesure de température sont évaluées périodiquement à intervalles de temps généralement plus courts que la durée d'observation et sont enregistrées dans une mémoire d'un analyseur multivoie appartenant au système de surveillance de la machine (7);
(b) le contenu de la mémoire est extrait après écoulement de la durée d'observation pour l'élaboration de la valeur moyenne de température;
(c) la mémoire est effacée.

4. Procédé selon la revendication 1 ou 2, dans lequel la grandeur de mesure de température est intégrée sur toute l'étendue de la durée d'observation pour l'élaboration de la valeur moyenne de température.

5. Procédé selon l'une des revendications 1 à 4, dans lequel
(a) lors du fonctionnement de la machine à combustion (3), on élabore d'autres grandeurs de mesure caractérisant l'état de fonctionnement de la machine à combustion (3);
(b) on observe chacune de ces autres grandeurs de mesure pendant la durée d'observation;
(c) on établit la valeur limite en tenant compte de ces autres grandeurs de mesure.

6. Procédé selon la revendication 5, dans lequel :
(a) les autres grandeurs de mesure sont enregistrées et mémorisées dans une mémoire d'un analyseur multivoie multidimensionnel ;
(b) le contenu de l'analyseur multivoie multidimensionnel est extrait après écoulement de la durée d'observation pour l'élaboration d'autres valeurs moyennes;
(c) l'analyseur multivoie multidimensionnel est effacé.

7. Procédé selon la revendication 1, dans lequel les grandeurs de mesure de température sont enregistrées périodiquement et mémorisées dans l'analyseur multivoie multidimensionnel en même temps que les autres grandeurs de mesure.

8. Procédé pour surveiller l'activité cataiytique d'un catalyseur (1) traversable par un gaz d'échappement dans un système d'échappement (2) d'une machine à combustion (3) par l'intermédiaire d'une mesure périodiquement répétée en cours de fonctionnement de la machine à combustion (3) au moyen d'un système de surveillance de machine (7) en établissant une grandeur de mesure de température à partir de signaux d'au moins deux capteurs de mesure de température (4, 5, 6) associés au catalyseur (1),
caractérisé en ce que l'on y adjoint les opérations suivantes :
(a) établissement d'autres grandeurs de mesure caractérisant les états de fonctionnement respectifs de la machine à combustion (3);
(b) établissement d'une valeur limite de température à partir de ces autres grandeurs de mesure;
(c) établissement de l'activité par comparaison de la grandeur de mesure de température avec la valeur limite de température et délivrance d'un message au cas où la grandeur de mesure de température est inférieure à la valeur limite de température.

9. Procédé selon la revendication 8, dans lequel, pour l'établissement de la valeur limite de température, on utilise, outre les autres grandeurs de mesure, une grandeur de température obtenue lors d'une mesure antérieure.

10. Procédé selon la revendication 9, dans lequel on enregistre chaque fois l'activité sur une durée suffisamment longue pour permettre l'élimination de restrictions particulières et on en tient compte chaque fois pour l'établissement de la valeur limite de température.

11. Procédé selon l'une des revendications 8 à 10, dans lequel la grandeur de mesure de température correspond à la différence des températures qui sont mesurées par les deux capteurs de température (4, 5, 6).

12. Procédé selon l'une des revendications 8 à 11, dans lequel :
(a) on élabore la dérivée temporelle d'au moins un signal;
(b) on retarde la mesure au cas où la dérivée temporelle s'écarte substantiellement de zéro.

13. Procédé selon l'une des revendications 8 à 10, dans lequel :
(a) on surveille les variations subites du signal d'un premier capteur de mesure de température (4);
(b) lorsque l'on rencontre une variation subite, on observe le signal d'un second capteur de mesure de température (5) sur une courte durée;
(c) on élabore la grandeur de mesure de température à partir de la variation temporelle du signal du second capteur de mesure de température.

14. Procédé selon la revendication 13, dans lequel la courte durée a une longueur d'au plus environ 3 secondes, de préférence entre environ 1 seconde et environ 2 secondes.
